# EUROPEAN PATENT APPLICATION

(11) **EP 4 810 803 A1**
(43) Date of publication of application: **23.09.2026**
(21) Application number: 24890517.6
(22) Date of filing: 04.11.2024
(51) Int. Cl.: F04D 29/057, F04D 25/06, F04D 29/58

(54) **GAS-BEARING CENTRIFUGAL REFRIGERANT COMPRESSOR**

(30) Priority: 17.11.2023 CN 202311543158
(71) Applicant: Xeca Turbo (Chongqing) Technology Co., Ltd, Chongqing 400050 (CN)
(72) Inventor: ZHAO, Jiawei, Chongqing 400050 (CN); YU, Ti, Chongqing 400050 (CN); TANG, Qin, Chongqing 400050 (CN)
(74) Representative: Murgitroyd & Company
(86) International application number: PCT/CN2024/129550
(87) International publication number: WO 2025/103160

(57) **Abstract**

The present invention relates to the field of motor technologies, and in particular, to a gas-floating centrifugal refrigerant compressor. A motor housing and a gas outlet mechanism together form a main structure of the compressor. The compressor supplies power to a motor stator through an electronic control system, so as to drive a rotor to rotate. The rotor drives a first impeller and a second impeller to rotate. The first impeller and the second impeller perform work on a refrigerant gas entering a ventilation cavity. Due to a pressure difference between the impeller outlet and the installation cavity, a portion of gas leaks through a mounting gap of the first impeller and the second impeller. After passing through a sealing mechanism, the gas enters between a gas-floating bearing assembly and the rotor. Therefore, a gas film layer is formed when the rotor rotates, thereby achieving a function of a gas-floating bearing. Meanwhile, the refrigerant gas entering a mounting cavity will also cool the gas-floating bearing assembly. Furthermore, the compressor does not require an additional bearing gas supply system, thereby simplifying a design of the gas-floating bearing.

## Description

### TECHNICAL FIELD

The present invention relates to the field of motor technologies, and in particular, to a gas-floating centrifugal refrigerant compressor.

### BACKGROUND

Currently, an overall market scale of central air conditioning in China has reached a level of hundreds of billions. Driven by projects such as medical renovations, new infrastructure construction, and rail transit, a market space for small cooling capacity centrifugal refrigeration units is showing an upward trend. At present, small-capacity centrifugal compressors are mainly represented by magnetic levitation compressors. However, a magnetic levitation bearing is large in size and has a complex control system, making it very difficult to further miniaturize centrifugal refrigerant compressors. In comparison, a gas-floating bearing not only has low friction loss and strong high-temperature resistance, but also has a simple structure and high rotational accuracy, making it the most ideal support component for high-speed operation besides the magnetic levitation bearings.

As one of the future development directions for centrifugal compressors, gas-floating centrifugal compressors overcome shortcomings of traditional gear speed-increasing methods. They do not require a shaft displacement detection and bearing control system necessary for the magnetic levitation bearings, and have advantages such as high cost performance and no need for active control.

Existing gas-floating centrifugal refrigerant compressors, whether employing hydrostatic or hydrodynamic gas-floating, additionally require a bearing gas supply system or a special bearing gas supply channel structure to supply gas to the gas-floating bearing. This not only introduces an additional cost but also requires regular maintenance for a gas filter and other components, thereby increasing a maintenance cost.

### SUMMARY

In view of this, the present invention provides a gas-floating centrifugal refrigerant compressor that does not require an additional bearing gas supply system.

In a first aspect, the present invention provides a gas-floating centrifugal refrigerant compressor including a motor housing, a motor stator, a rotor, a gas-floating bearing assembly, a sealing mechanism and a gas outlet mechanism. The motor housing includes a mounting cavity. The motor stator is disposed in the mounting cavity. The rotor is disposed in the mounting cavity. The rotor and the motor stator are matingly mounted with each other, a first impeller and a second impeller are respectively provided at two ends of the rotor, and the first impeller and the second impeller at least partially extend out of the motor housing. The gas-floating bearing assembly is disposed in the mounting cavity, with a gap between the gas-floating bearing assembly and the rotor. The gas-floating bearing assembly is configured to support rotation of the rotor by means of a gas film formed by refrigerant gas. The sealing mechanism is configured to seal the mounting cavity with a set sealing strength. The gas outlet mechanism has a ventilation cavity. The first impeller and the second impeller are both located in the ventilation cavity, and the gas outlet mechanism is configured to form, within the ventilation cavity, a gas pressure higher than a gas pressure within the mounting cavity.

During use, the motor housing and the gas outlet mechanism together form a main structure of the compressor. The compressor is in a refrigerant gas environment, and an electric control system supplies power to the motor stator to drive the rotor to rotate. The rotor drives the first impeller and the second impeller to rotate, and the first impeller and the second impeller perform work on a refrigerant gas in the ventilation cavity. Therefore, the refrigerant gas in the ventilation cavity flows, and the gas outlet mechanism creates a pressure difference between the mounting cavity and the ventilation cavity, and the sealing mechanism seals the mounting cavity. Due to the pressure difference, a portion of the refrigerant gas leaks into the mounting cavity through a mounting gap between the first impeller and the second impeller, and enters between the gas-floating bearing assembly and the rotor to form a refrigerant gas layer, thereby achieving a function of a gas-floating bearing. Meanwhile, the refrigerant gas entering the mounting cavity will also cool the gas-floating bearing assembly. Furthermore, this embodiment does not require an additional bearing gas supply system, thereby simplifying a design of the gas-floating bearing.

In combination with the first aspect, in a possible implementation, the rotor includes a mating body, a first main shaft and a second main shaft. The motor stator is configured to drive the mating body to rotate. The first main shaft is connected between the mating body and the first impeller. The second main shaft is connected between the mating body and the second impeller. The gas-floating bearing assembly includes a first gas-floating bearing and a second gas-floating bearing. The first gas-floating bearing is disposed around a circumference of the first main shaft. The second gas-floating bearing is disposed around a circumference of the second main shaft.

In combination with the first aspect, in a possible implementation, the rotor also includes a first transition section and a second transition section. The first transition section is disposed between the first main shaft and the first impeller. A radial dimension of the first transition section is less than a radial dimension of the first main shaft. The second transition section is disposed between the second main shaft and the second impeller. A radial dimension of the second transition section is less than a radial dimension of the second main shaft. The sealing mechanism includes a first sealing plate and a second sealing plate. The first sealing plate is connected to the motor housing, and the first sealing plate is sleeved between the first main shaft and the first impeller. The second sealing plate is connected to the motor housing, and the second sealing plate is sleeved between the second main shaft and the second impeller.

In combination with the first aspect, in a possible implementation, the sealing mechanism also includes a thrust disc and a thrust adjustment assembly. The thrust disc is sleeved on a circumferential surface of the second transition section. The thrust adjustment assembly is connected to the thrust disc and the motor housing respectively, and the thrust adjustment assembly is configured to control a distance between a disc surface of the thrust disc and the motor housing.

In combination with the first aspect, in a possible implementation, the gas-floating centrifugal refrigerant compressor also includes a bushing sleeved on the circumferential surface of the second transition section. One end of the bushing abuts against the second impeller, the other end of the bushing abuts against a first disc surface of the thrust disc, and a second disc surface of the thrust disc abuts against an end surface of the second main shaft. The first disc surface and the second disc surface are respectively located on opposite sides of the thrust disc.

In combination with the first aspect, in a possible implementation, the gas-floating centrifugal refrigerant compressor also includes a thrust bearing disposed on the motor housing. A support surface of the thrust bearing faces the disc surface of the thrust disc, and the thrust bearing is configured to support the thrust disc to rotate relative to the motor housing.

In combination with the first aspect, in a possible implementation, the gas outlet mechanism includes a gas inlet seat and a first volute. The gas inlet seat includes a gas delivery port, the first impeller includes a first impeller gas inlet and a first impeller gas outlet, and the gas delivery port is connected to the first impeller gas inlet. The first volute is connected to the motor housing. The first volute includes a first volute gas inlet and a first volute gas outlet, and the first volute gas inlet is connected to the first impeller gas outlet. The gap between the first impeller and the motor housing communicates with the first volute gas inlet.

In combination with the first aspect, in a possible implementation, the gas outlet mechanism also includes an intermediate pipeline and a second volute. The intermediate pipeline includes a first end of the intermediate pipeline and a second end of the intermediate pipeline. The first end of the intermediate pipeline is connected to the first volute gas outlet. The second volute is connected to the motor housing. The second volute includes a second volute gas inlet and a second volute gas outlet, the second volute gas inlet is connected to the second end of the intermediate pipeline, and the second volute gas outlet is used for exhausting gas. A gap between the second impeller and the motor housing communicates with the first volute gas inlet.

In combination with the first aspect, in a possible implementation, the motor housing also includes a first cavity and a second cavity. A gap between the first gas-floating bearing and the first main shaft communicates with the first cavity. A gap between the second gas-floating bearing and the second main shaft communicates with the second cavity. A cooling channel is provided between the motor stator and the mating body, and the cooling channel is configured to communicate the first cavity with the second cavity.

In combination with the first aspect, in a possible implementation, the motor housing also includes a cooling gas outlet, a motor cooling channel and a cooling gas inlet. One end of the cooling gas outlet communicates with an exterior of the motor housing, and the other end of the cooling gas outlet communicates with the second cavity. The motor cooling channel is provided on an inner wall of the motor housing. The motor cooling channel is disposed around the motor stator, and the motor cooling channel communicates with the first cavity. One end of the cooling gas inlet communicates with an exterior of the motor housing, and the other end of the cooling gas inlet communicates with the motor cooling channel.

### BRIEF DESCRIPTION OF THE DRAWINGS

FIG. 1 is a schematic structural diagram of a gas-floating centrifugal refrigerant compressor according to an embodiment of the present invention.
FIG. 2 is a schematic partial structural diagram of a gas-floating centrifugal refrigerant compressor according to another embodiment of the present invention.
FIG. 3 is a schematic structural diagram of a gas-floating centrifugal refrigerant compressor according to another embodiment of the present invention.

### DETAILED DESCRIPTION OF THE EMBODIMENTS

Technical solutions in embodiments of the present invention will be clearly and completely described below with reference to the accompanying drawings in the embodiments of the present invention. Obviously, the described embodiments are only a portion of the embodiments of the present invention, rather than all of them. Based on the embodiments of the present invention, all other embodiments obtained by those with ordinary skill in the art without creative efforts shall fall within the protection scope of the present invention.

An exemplary gas-floating centrifugal refrigerant compressor is as follows.

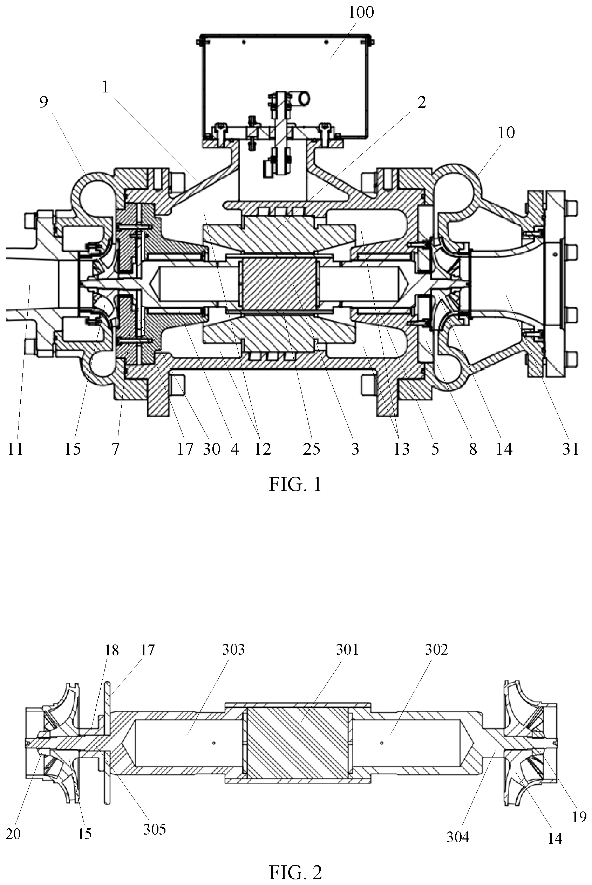

FIG. 1 is a schematic structural diagram of a gas-floating centrifugal refrigerant compressor according to an embodiment of the present invention. The present invention provides a gas-floating centrifugal refrigerant compressor. In one embodiment, as shown in FIG. 1, the gas-floating centrifugal refrigerant compressor includes a motor housing 1, a motor stator 2, a rotor 3, a gas-floating bearing assembly, a sealing mechanism and a gas outlet mechanism.

The motor housing 1 includes a mounting cavity, and the motor stator 2 is disposed in the mounting cavity. The rotor 3 is disposed in the mounting cavity, the rotor 3 and the motor stator 2 are matingly mounted with each other, a first impeller 14 and a second impeller 15 are respectively provided at two ends of the rotor 3, and the first impeller 14 and the second impeller 15 at least partially extend out of the motor housing 1. The gas-floating bearing assembly is disposed in the mounting cavity, there is a gap between the gas-floating bearing assembly and the rotor, and the gas-floating bearing assembly is configured to support rotation of the rotor through a gas film layer formed by a refrigerant gas. The sealing mechanism is configured to seal the mounting cavity with a set sealing strength. The gas outlet mechanism has a ventilation cavity, the first impeller 14 and the second impeller 15 are both located in the ventilation cavity, and the gas outlet mechanism is configured to form, within the ventilation cavity, a gas pressure higher than a gas pressure within the mounting cavity.

In application of this embodiment, the motor housing 1 and the gas outlet mechanism together form a main structure of the compressor. The compressor is in a refrigerant gas environment, and an electrical control system 100 supplies power to the motor stator 2, thereby driving the rotor 3 to rotate. The rotor 3 drives the first impeller 14 and the second impeller 15 to rotate, and the first impeller 14 and the second impeller 15 perform work on a refrigerant gas entering the ventilation cavity to make the refrigerant gas in the ventilation cavity flow. Therefore, the gas outlet mechanism and the sealing mechanism create a pressure difference between the mounting cavity and the ventilation cavity. Due to the pressure difference at positions where the first impeller 14 and the second impeller 15 and the mounting cavity are located, a portion of gas leaks through a mounting gap of the first impeller 14 and the second impeller 15 and enters the mounting cavity after passing through the sealing mechanism, and then enters a gap between the gas-floating bearing assembly and the rotor. Therefore, when the rotor rotates, a refrigerant gas layer is formed, thereby achieving a function of a gas-floating bearing. Meanwhile, the refrigerant gas entering the mounting cavity will also cool the gas-floating bearing assembly. Furthermore, this embodiment does not require an additional bearing gas supply system, thereby simplifying a design of the gas-floating bearing.

FIG. 2 is a partial schematic structural diagram of a gas-floating centrifugal refrigerant compressor according to another embodiment of the present invention. In one embodiment, as shown in FIG. 2, the rotor 3 includes a mating body 301, a first main shaft 302 and a second main shaft 303. The motor stator 2 is configured to drive the mating body 301 to rotate. For example, the mating body 301 is made of a permanent magnet, and a coil is wound around the motor stator 2. When the electrical control system 100 supplies power to the coil, an electromagnetic field is formed, thereby driving the mating body 301 to rotate. The first main shaft 302 is connected between the mating body 301 and the first impeller 14, and the second main shaft 303 is connected between the mating body 301 and the second impeller 15. Referring to FIG. 1, the gas-floating bearing assembly includes a first gas-floating bearing 5 and a second gas-floating bearing 4. The first gas-floating bearing 5 is disposed around a circumference of the first main shaft 302. The second gas-floating bearing 4 is disposed around a circumference of the second main shaft 303.

In this embodiment, the first impeller 14 is driven to rotate by the first main shaft 302, and the second impeller 15 is driven to rotate by the second main shaft 303. The first gas-floating bearing 5 provides bearing support for the first main shaft 302, and the second gas-floating bearing 4 provides bearing support for the second main shaft 303.

In one embodiment, as shown in FIG. 1, the gas outlet mechanism includes a gas inlet seat 31 and a first volute 10. The gas inlet seat 31 may be fixedly connected to the first volute or the motor housing 1. The gas inlet seat 31 includes a gas delivery port, and the gas inlet seat 31 is also provided with a structure for gas intake. The first impeller 14 includes a first impeller gas inlet and a first impeller gas outlet. The gas delivery port is connected to the first impeller gas inlet. The first volute 10 is connected to the motor housing 1. The first volute 10 includes a first volute gas inlet and a first volute gas outlet. The first volute gas inlet is connected to the first impeller gas outlet. A gap between the first impeller 14 and the motor housing 1 communicates with the first volute gas inlet.

In this embodiment, a cold gas discharged from the refrigerator may be introduced into the gas inlet seat 31. Driven by the first impeller 14, the cold gas enters the first volute 10. Then, a structural design of the first volute 10 ensures that a high pressure is formed in the first volute 10, that is, a gas pressure in the first volute 10 is greater than that in the motor housing 1. Specifically, an internal gas pressure may be increased by controlling an exhaust volume of the first volute 10. Due to the pressure difference, the cold gas in the first volute 10 enters the motor housing 1 through the gap between the first impeller 14 and the motor housing 1. Then, the cold gas enters a gap between the first gas-floating bearing 5 and the first main shaft 302 to form a refrigerant gas layer, thereby achieving gas-floating bearing support. Meanwhile, the cold gas may also cool the first gas-floating bearing 5.

In one embodiment, as shown in FIG. 1, the gas outlet mechanism also includes an intermediate pipeline 11 and a second volute 9. The intermediate pipeline 11 includes a first end o and a second end, and the first end of the intermediate pipeline is connected to the first volute gas outlet. The second volute 9 is connected to the motor housing 1, and the second volute 9 includes a second volute gas inlet and a second volute gas outlet. The second volute gas inlet is connected to the second end of the intermediate pipeline, and the second volute gas outlet is used for exhausting gas. A gap between the second impeller 15 and the motor housing 1 communicates with the first volute gas inlet.

In this embodiment, the cold gas discharged from the first volute 10 also enters the second volute 9 through the intermediate pipeline 11. A structural design of the second volute 9 ensures that a high pressure is formed in the second volute 9, that is, a gas pressure in the second volute 9 is greater than that in the motor housing 1. Specifically, an internal gas pressure may be increased by controlling an exhaust volume of the second volute 9. Due to a pressure difference, the cold gas in the second volute 9 enters the motor housing 1 through the gap between the second impeller 15 and the motor housing 1. The cold gas then enters a gap between the second gas-floating bearing 4 and the second main shaft 303 to form a refrigerant gas layer, thereby achieving gas-floating bearing support. Meanwhile, the cold gas may also cool the second gas-floating bearing 4.

In one embodiment, as shown in FIG. 1, the motor housing 1 also includes a first cavity 13 and a second cavity 12. The gap between the first gas-floating bearing 5 and the first main shaft 302 communicates with the first cavity 13. The gap between the second gas-floating bearing 4 and the second main shaft 303 communicates with the second cavity 12. A cooling channel 25 is provided between the motor stator 2 and the mating body 301, and the cooling channel 25 is configured to communicate the first cavity 13 with the second cavity 12.

In application of this embodiment, the cold gas passing through the first gas-floating bearing 5 and the first main shaft 302 enters the first cavity 13, while the cold gas passing through the second gas-floating bearing 4 and the second main shaft 303 enters the second cavity 12. The cold gas, passing through the cooling channel 25, may also cool the motor stator 2 and the mating body 301 of the rotor 3.

In one embodiment, as shown in FIG. 1, the motor housing 1 also includes a cooling gas outlet 27, a motor cooling channel 22 and a cooling gas inlet 26. One end of the cooling gas outlet 27 communicates with an exterior of the motor housing 1, and the other end of the cooling gas outlet 27 communicates with the second cavity 12. The motor cooling channel 22 is provided on an inner wall of the motor housing 1, the motor cooling channel 22 is disposed around the motor stator 2, and the motor cooling channel 22 communicates with the first cavity 13. One end of the cooling gas inlet 26 communicates with an exterior of the motor housing 1, and the other end of the cooling gas inlet 26 communicates with the motor cooling channel 22.

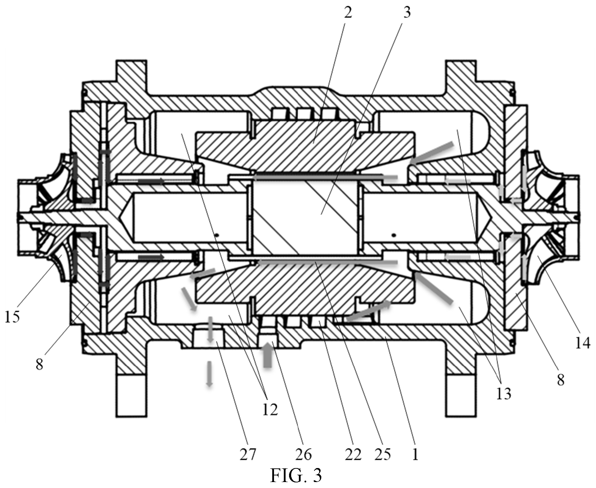

FIG. 3 is a schematic structural diagram of a gas-floating centrifugal refrigerant compressor according to another embodiment of the present invention. In application of this embodiment, referring to FIG. 3, both the cooling gas inlet 26 and the cooling gas outlet 27 communicate with the exterior. A gas is input from the cooling gas inlet 26 at a low flow rate. After passing through the motor cooling channel 22 to cool the motor stator 2, the gas enters the first cavity 13. The cold gas entering the first cavity 13 through the first gas-floating bearing 5 increases a pressure in the first cavity 13. The cold gas mixes with the gas input from the cooling gas inlet 26 and then passes through the cooling channel 25 to cool the motor stator 2 and the mating body 301. The mixed gas enters the second cavity 12 through the cooling channel 25 and mixes with the cold gas passing through the second gas-floating bearing 4, and then is discharged through the cooling gas outlet 27.

In one embodiment, as shown in FIG. 1, the rotor 3 also includes a first transition section 304 and a second transition section 305. The first transition section 304 is disposed between the first main shaft 302 and the first impeller 14, and a radial dimension of the first transition section 304 is less than that of the first main shaft 302. The second transition section 305 is disposed between the second main shaft 303 and the second impeller 15, and a radial dimension of the second transition section 305 is less than that of the second main shaft 303. Referring to FIG. 1, the sealing mechanism includes a first sealing plate 8 and a second sealing plate 7. The first sealing plate 8 is connected to the motor housing 1, and is sleeved between the first main shaft 302 and the first impeller 14. The second sealing plate 7 is connected to the motor housing 1, and is sleeved between the second main shaft 303 and the second impeller 15.

In application of this embodiment, the first sealing plate 8 seals the motor housing 1 from a side of the first impeller 14, and the second sealing plate 7 seals the motor housing 1 from a side of the second impeller 15. The cold gas outside the motor housing 1 may sequentially pass through the first impeller 14 and the first sealing plate 8 to enter the motor housing 1, and also sequentially pass through the second impeller 15 and the second sealing plate 7 to enter the motor housing 1. An intake gas volume entering the motor housing 1 from the side of the first impeller 14 may be controlled by adjusting a sealing strength of the first sealing plate 8, and an intake gas volume entering the motor housing 1 from the side of the second impeller 15 may be controlled by adjusting a sealing strength of the second sealing plate 7.

In one embodiment, as shown in FIG. 1 and FIG. 2, the sealing mechanism also includes a thrust disc 17 and a thrust adjustment assembly (not shown in the figure). The thrust disc 17 is sleeved on a circumferential surface of the second transition section 305, the thrust adjustment assembly is connected to thrust disc 17 and the motor housing 1 respectively, and the thrust adjustment assembly is configured to control a distance between the disc surface of thrust disc 17 and the motor housing 1. Specifically, the thrust adjustment assembly may adopt a distance adjustment member such as a bolt, or the like, and a position of the thrust disc 17 relative to the motor housing 1 may be adjusted by tightening the bolt.

In application of this embodiment, the distance between the thrust disc 17 and the motor housing 1 may be adjusted by operating the thrust adjustment assembly. Since the rotor 3, the first sealing plate 8, the second sealing plate 7, and the thrust disc 17 are interconnected, when the thrust disc 17 moves, the first sealing plate 8 and the second sealing plate 7 move simultaneously, so that the sealing strength of the first sealing plate 8 and the second sealing plate 7 may be adjusted through the thrust adjustment assembly.

In one embodiment, as shown in FIG. 2, the gas-floating centrifugal refrigerant compressor also includes a bushing 18. The bushing 18 is sleeved on the circumferential surface of the second transition section 305, one end of the bushing 18 abuts against the second impeller 15, the other end of the bushing 18 abuts against the first disc surface of the thrust disc 17, and a second disc surface of the thrust disc 17 abuts against an end surface of the second main shaft 303. The first disc surface and the second disc surface are respectively located on two opposite sides of the thrust disc 17. In this embodiment, the bushing 18 serves to fix and limit the thrust disc 17, thereby ensuring that the first sealing plate 8 and the second sealing plate 7 may be driven to move by the thrust disc 17.

In one embodiment, as shown in FIG. 2, an end of the first impeller 14 is positioned by a shaft end of the first main shaft 302, and the first impeller 14 is then locked and fixed by a first locknut 19. An end of the second impeller 15 is positioned by a shaft end of the second main shaft 303 and abuts against an end surface of the bushing 18, and the second impeller 15 is then locked and fixed by a second locknut 20.

In one embodiment, as shown in FIG. 1, the gas-floating centrifugal refrigerant compressor also includes a thrust bearing 30. The thrust bearing 30 is disposed on the motor housing 1, a support surface of the thrust bearing 30 faces the disc surface of the thrust disc 17, and the thrust bearing 30 is configured to support the thrust disc 17 to rotate relative to the motor housing 1. In this embodiment, since the rotor 3 drives the thrust disc 17 to rotate together when rotating, the thrust bearing 30 may effectively provide bearing support for the thrust disc 17.

Referring to FIG. 1 and FIG. 3, a solid line with an arrow in FIG. 3 indicates an approximate direction of airflow. The gas is input from the cooling gas inlet 26 at a low flow rate. After passing through the motor cooling channel 22 to cool the motor stator 2, the gas enters the first cavity 13. The cold gas in the first volute 10 sequentially passes through the first impeller 14 and the first sealing plate 8 to reach a position where the first gas-floating bearing 5 is located. After passing through the first gas-floating bearing 5, the cold gas enters the first cavity 13 and mixes with the gas input from the cooling gas inlet 26, and then the mixed gas passes through the cooling channel 25 to cool the motor stator 2 and the mating body 301. The cold gas in the second volute 9 sequentially passes through the second impeller 15, the second sealing plate 7, and the thrust disc 17 to reach a position where the second gas-floating bearing 4 is located. After passing through the second gas-floating bearing 4, the cold gas enters the second cavity 12. A mixed gas in the second cavity 12 is discharged through the cooling gas outlet 27. The flow rates of the cooling gas inlet 26 and the cooling gas outlet 27 may be adjusted to control the pressure differences between the first cavity 13, the second cavity 12, and the exterior.

The basic principles of the present invention are described above in conjunction with specific embodiments. However, it should be noted that the advantages, benefits, effects, and the like mentioned in the present invention are merely examples rather than limitations, and should not be considered as essential to all embodiments of the present invention. In addition, the specific details disclosed above are for illustrative purposes, and to facilitate understanding, and are not intend to limit. These details do not restrict the present invention to being implemented with the aforementioned specific details.

The block diagrams of devices, apparatuses, equipment, and systems involved in the present invention are only illustrative examples, and are not intended to require or imply that connections, arrangements, or configurations must be made as shown in the block diagrams. As those skilled in the art will recognize, these devices, apparatuses, equipment, and systems can be connected, arranged, and configured in any manner. Words such as 'including', 'comprising', and 'having' are open-ended terms, meaning 'including but not limited to', and are interchangeable with each other. The words 'or' and 'and' as used herein refer to the words 'and/or', and are interchangeable with each other, unless the context clearly indicates otherwise. The word 'such as' as used herein refers to the phrase 'such as but not limited to', and are interchangeable with each other.

It should also be noted that in the devices, equipment, and methods of the present invention, each component or step can be decomposed and/or recombined. Such decomposition and/or recombination should be regarded as equivalent solutions of the present invention.

The above description of the disclosed aspects is provided to enable any person skilled in the art to make or use the present invention. Various modifications to these aspects will be readily apparent to those skilled in the art, and the general principles defined herein can be applied to other aspects without departing from the scope of the present invention. Therefore, the present invention is not intended to be limited to the aspects shown herein, but is to be accorded the widest scope consistent with the principles and novel features disclosed herein.

The above descriptions are only preferred embodiments of the present invention, and are not intended to limit the present invention. Any modifications, equivalent replacements, etc., made within the spirit and principles of the present invention should be included within the protection scope of the present invention.

## Claims

1. A gas-floating centrifugal refrigerant compressor, comprising:
a motor housing (1), comprising a mounting cavity;
a motor stator (2), disposed in the mounting cavity;
a rotor (3), disposed in the mounting cavity, wherein the rotor (3) and the motor stator (2) are matingly mounted with each other, a first impeller (14) and a second impeller (15) are respectively provided at two ends of the rotor (3), and the first impeller (14) and the second impeller (15) at least partially extend out of the motor housing (1);
a gas-floating bearing assembly, disposed in the mounting cavity, with a gap between the gas-floating bearing assembly and the rotor (3), the gas-floating bearing assembly being configured to support rotation of the rotor through a gas film formed by a refrigerant gas;
a sealing mechanism, configured to seal the mounting cavity with a set sealing strength; and
a gas outlet mechanism, having a ventilation cavity, the first impeller (14) and the second impeller (15) being located in the ventilation cavity, and the gas outlet mechanism being configured to form, within the ventilation cavity, a gas pressure higher than a gas pressure within the mounting cavity.

2. The gas-floating centrifugal refrigerant compressor according to claim 1, wherein the rotor (3) comprises:
a mating body (301), and the motor stator (2) is configured to drive the mating body (301) to rotate;
a first main shaft (302), connected between the mating body (301) and the first impeller (14); and
a second main shaft (303), connected between the mating body (301) and the second impeller (15), wherein
the gas-floating bearing assembly comprises:
a first gas-floating bearing (5), disposed around a circumference of the first main shaft (302); and
a second gas-floating bearing (4), disposed around a circumference of the second main shaft (303).

3. The gas-floating centrifugal refrigerant compressor according to claim 2, wherein the rotor (3) further comprises:
a first transition section (304), disposed between the first main shaft (302) and the first impeller (14), and a radial dimension of the first transition section (304) is less than a radial dimension of the first main shaft (302); and
a second transition section (305), disposed between the second main shaft (303) and the second impeller (15), and a radial dimension of the second transition section (305) is less than a radial dimension of the second main shaft (303); and
the sealing mechanism comprises:
a first sealing plate (8), connected to the motor housing (1), and the first sealing plate (8) is sleeved between the first main shaft (302) and the first impeller (14); and
a second sealing plate (7), connected to the motor housing (1), and the second sealing plate (7) is sleeved between the second main shaft (303) and the second impeller (15).

4. The gas-floating centrifugal refrigerant compressor according to claim 3, wherein the sealing mechanism further comprises:
a thrust disc (17), sleeved on a circumferential surface of the second transition section (305); and
a thrust adjustment assembly, connected to the thrust disc (17) and the motor housing (1) respectively, and the thrust adjustment assembly is configured to control a distance between a disc surface of the thrust disc (17) and the motor housing (1).

5. The gas-floating centrifugal refrigerant compressor according to claim 4, further comprising:
a bushing (18), sleeved on the circumferential surface of the second transition section (305), wherein one end of the bushing (18) abuts against the second impeller (15), the other end of the bushing (18) abuts against a first disc surface of the thrust disc (17), and a second disc surface of the thrust disc (17) abuts against an end surface of the second main shaft (303); and the first disc surface and the second disc surface are respectively located on two opposite sides of the thrust disc (17).

6. The gas-floating centrifugal refrigerant compressor according to claim 4 or claim 5, further comprising:
a thrust bearing (30), disposed on the motor housing (1), wherein a support surface of the thrust bearing (30) faces the disc surface of the thrust disc (17), and the thrust bearing (30) is configured to support the thrust disc (17) to rotate relative to the motor housing (1).

7. The gas-floating centrifugal refrigerant compressor according to any one of claims 2 to 6, wherein the gas outlet mechanism comprises:
a gas inlet seat (31), the gas inlet seat (31) comprises a gas delivery port, the first impeller (14) comprises a first impeller gas inlet and a first impeller gas outlet, and the gas delivery port is connected to the first impeller gas inlet; and
a first volute (10), connected to the motor housing (1), the first volute (10) comprises a first volute gas inlet and a first volute gas outlet, and the first volute gas inlet is connected to the first impeller gas outlet, wherein
a gap between the first impeller (14) and the motor housing (1) communicates with the first volute gas inlet, and the gas inlet seat (31) is connected to the first volute (10) or the motor housing (1).

8. The gas-floating centrifugal refrigerant compressor according to claim 7, wherein the gas outlet mechanism further comprises:
an intermediate pipeline (11) comprising a first end and a second end, and the first end of the intermediate pipeline is connected to the first volute gas outlet; and
a second volute (9), connected to the motor housing (1), the second volute (9) comprises a second volute gas inlet and a second volute gas outlet, the second volute gas inlet is connected to the second end of the intermediate pipeline, and the second volute gas outlet is used for exhausting gas, wherein
a gap between the second impeller (15) and the motor housing (1) communicates with the first volute gas inlet.

9. The gas-floating centrifugal refrigerant compressor according to claim 8, wherein the motor housing (1) further comprises:
a first cavity (13), and a gap between the first gas-floating bearing (5) and the first main shaft (302) communicates with the first cavity (13); and
a second cavity (12), a gap between the second gas-floating bearing (4) and the second main shaft (303) communicates with the second cavity (12), wherein
a cooling channel (25) is provided between the motor stator (2) and the mating body (301), and the cooling channel (25) is configured to communicate the first cavity (13) with the second cavity (12).

10. The gas-floating centrifugal refrigerant compressor according to claim 9, wherein the motor housing (1) further comprises:
a cooling gas outlet (27), one end of the cooling gas outlet (27) communicates with an exterior of the motor housing (1), and the other end of the cooling gas outlet (27) communicates with the second cavity (12);
a motor cooling channel (22), provided on an inner wall of the motor housing (1), the motor cooling channel (22) is disposed around the motor stator (2), and the motor cooling channel (22) communicates with the first cavity (13); and
a cooling gas inlet (26), one end of the cooling gas inlet (26) communicates with an exterior of the motor housing (1), and the other end of the cooling gas inlet (26) communicates with the motor cooling channel (22).
